# EUROPEAN PATENT APPLICATION

(11) **EP 4 742 828 A2**
(43) Date of publication of application: **13.05.2026**
(21) Application number: 26167502.9
(22) Date of filing: 23.02.2023
(51) Int. Cl.: H04W 92/16

(54) **SIDELINK BEAM REPORTING MECHANISM**

(30) Priority: 04.03.2022 US 202263268877 P
(62) Divisional of application: 23712420.1
(71) Applicant: Apple Inc., Cupertino, CA 95014 (US)
(72) Inventor: YE, Chunxuan, San Diego, California, 92121 (US); ZENG, Wei, Cupertino, California, 95014 (US); WU, Zhibin, Cupertino, California, 95014 (US); SUN, Haitong, Cupertino, California, 95014 (US); ZHANG, Yushu, Beijing, 100022 (CN); NIU, Huaning, Cupertino, California, 95014 (US); ZHANG, Dawei, Cupertino, California, 95014 (US); HE, Hong, Cupertino, California, 95014 (US); YANG, Weidong, San Diego, California, 92121 (US); FAKOORIAN, Seyed Ali Akbar, San Diego, California, 92121 (US)
(74) Representative: Zacco Denmark A/S

(57) **Abstract**

Systems and methods for sidelink (SL) beam reporting mechanisms between a transmit (Tx) UE and a receive (Rx) UE are disclosed herein. The Tx UE may send a combined physical sidelink control channel (PSCCH)/physical sidelink shared channel (PSSCH) having one or more channel state information reference signals (CSI-RSs) on corresponding beams to the Rx UE. The Rx UE may perform beam measurement on the CSI-RSs and send a beam report to the Tx UE that is based on such measurement. Systems and methods for configuring various aspects of the beam reporting (and its associated beam measurement) between the Tx UE and the Rx UE, for triggering SL beam reporting between the Tx UE and the Rx UE, and for performing SL beam reporting relative to a zone identifier (ID) for one of the Tx UE and the Rx UE are disclosed.

## Description

### TECHNICAL FIELD

This application relates generally to wireless communication systems, including wireless communications systems that include a transmit (Tx) UE that communicates with a receive (Rx) UE using sidelink (SL) communications.

### BACKGROUND

Wireless mobile communication technology uses various standards and protocols to transmit data between a base station and a wireless communication device. Wireless communication system standards and protocols can include, for example, 3rd Generation Partnership Project (3GPP) long term evolution (LTE) (e.g., 4G), 3GPP new radio (NR) (e.g., 5G), and IEEE 802.11 standard for wireless local area networks (WLAN) (commonly known to industry groups as Wi-Fi^{®}).

As contemplated by the 3GPP, different wireless communication systems standards and protocols can use various radio access networks (RANs) for communicating between a base station of the RAN (which may also sometimes be referred to generally as a RAN node, a network node, or simply a node) and a wireless communication device known as a user equipment (UE). 3GPP RANs can include, for example, global system for mobile communications (GSM), enhanced data rates for GSM evolution (EDGE) RAN (GERAN), Universal Terrestrial Radio Access Network (UTRAN), Evolved Universal Terrestrial Radio Access Network (E-UTRAN), and/or Next-Generation Radio Access Network (NG-RAN).

Each RAN may use one or more radio access technologies (RATs) to perform communication between the base station and the UE. For example, the GERAN implements GSM and/or EDGE RAT, the UTRAN implements universal mobile telecommunication system (UMTS) RAT or other 3GPP RAT, the E-UTRAN implements LTE RAT (sometimes simply referred to as LTE), and NG-RAN implements NR RAT (sometimes referred to herein as 5G RAT, 5G NR RAT, or simply NR). In certain deployments, the E-UTRAN may also implement NR RAT. In certain deployments, NG-RAN may also implement LTE RAT.

A base station used by a RAN may correspond to that RAN. One example of an E-UTRAN base station is an Evolved Universal Terrestrial Radio Access Network (E-UTRAN) Node B (also commonly denoted as evolved Node B, enhanced Node B, eNodeB, or eNB). One example of an NG-RAN base station is a next generation Node B (also sometimes referred to as a g Node B or gNB).

A RAN provides its communication services with external entities through its connection to a core network (CN). For example, E-UTRAN may utilize an Evolved Packet Core (EPC), while NG-RAN may utilize a 5G Core Network (5GC).

Frequency bands for 5G NR may be separated into two or more different frequency ranges. For example, Frequency Range 1 (FR1) may include frequency bands operating in sub-6 GHz frequencies, some of which are bands that may be used by previous standards, and may potentially be extended to cover new spectrum offerings from 410 MHz to 7125 MHz. Frequency Range 2 (FR2) may include frequency bands from 24.25 GHz to 52.6 GHz. Note that in some systems, FR2 may also include frequency bands from 52.6 GHz to 71 GHz (or beyond). Bands in the millimeter wave (mmWave) range of FR2 may have smaller coverage but potentially higher available bandwidth than bands in FR1. Skilled persons will recognize these frequency ranges, which are provided by way of example, may change from time to time or from region to region.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 illustrates a method of SL CSI-RS acquisition between a Tx UE and an Rx UE, according to an embodiment.
FIG. 2 illustrates a diagram of aperiodic triggering of a SL beam report, according to embodiments discussed herein.
FIG. 3 illustrates a diagram of periodic (semi-persistent) triggering of SL beam reporting, according to embodiments discussed herein.
FIG. 4 illustrates a diagram of periodic (semi-persistent) triggering of SL beam reporting, according to embodiments discussed herein.
FIG. 5 illustrates a diagram of event-based triggering of SL beam reporting, according to embodiments discussed herein.
FIG. 6 is visualization of a set of zones using zone identifiers 0 through 15, as may be defined by a resource pool configuration for the SL resource pool that is used by a Tx UE and an Rx UE to perform SL communications, according to an embodiment.
FIG. 7 illustrates a method of a Tx UE for performing sidelink communications with an Rx UE, according to an embodiment.
FIG. 8 illustrates a method of a Tx UE for performing sidelink communications with an Rx UE, according to an embodiment.
FIG. 9 illustrates a method of a Tx UE for performing sidelink communications with an Rx UE, according to an embodiment.
FIG. 10 illustrates a method of a Tx UE for performing sidelink communications with an Rx UE, according to an embodiment.
FIG. 11 illustrates a method of a Tx UE for performing sidelink communications with an Rx UE, according to an embodiment.
FIG. 12 illustrates a method of a Tx UE for performing sidelink communications with an Rx UE, according to an embodiment.
FIG. 13 illustrates a method of an Rx UE for performing SL communications with a Tx UE, according to an embodiment.
FIG. 14 illustrates a method of a Tx UE for performing sidelink communications with an Rx UE, according to an embodiment.
FIG. 15 illustrates a method of an Rx UE for performing SL communications with a Tx UE, according to an embodiment.
FIG. 16 illustrates an example architecture of a wireless communication system, according to embodiments disclosed herein.
FIG. 17 illustrates a system for performing signaling between a first wireless device and a second wireless device, according to embodiments disclosed herein.

### DETAILED DESCRIPTION

Various embodiments are described with regard to a UE. However, reference to a UE is merely provided for illustrative purposes. The example embodiments may be utilized with any electronic component that may establish a connection to a network and is configured with the hardware, software, and/or firmware to exchange information and data with the network. Therefore, the UE as described herein is used to represent any appropriate electronic component.

### Embodiments of Sidelink (SL) CSI Acquisition

In embodiments herein, sidelink (SL) communications among two or more UE are discussed. The SL communications discussed herein contemplate communications that occur between the two or more UE without the use of an intermediary RAN device such as a base station. For example, the SL communications discussed herein include the case where signaling generated by a first UE is (directly) received at and used by a second UE.

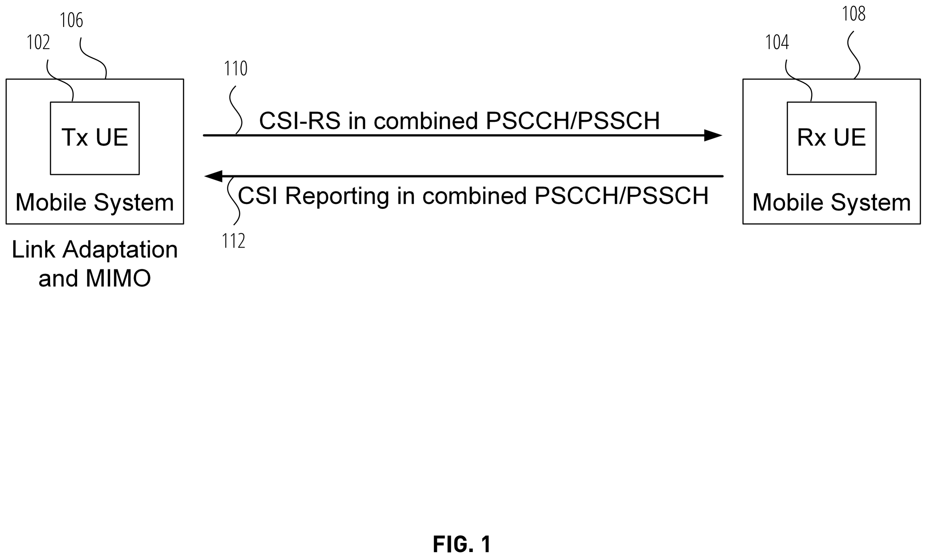

FIG. 1 illustrates a method of SL channel state information reference signal (CSI-RS) acquisition between a transmit (Tx) UE 102 and a receive (Rx) UE 104, according to an embodiment. As used herein, the term "Tx UE" may refer to a first UE that transmits a combined physical sidelink control channel (PSCCH)/physical sidelink shared channel (PSSCH) to an Rx UE. Accordingly, as used here, the term "Rx UE" may refer to a second UE that receives such a combined PSSCH/PSSCH.

In the embodiment of FIG. 1, the Tx UE 102 has been illustrated as part of the first mobile system 106 (e.g., a moving vehicle) and the Rx UE 104 has been illustrated as part of the second mobile system 108. This has been given by way of example and not by limitation. In other words, it is contemplated that one or both of the Tx UE 102 and the Rx UE 104 could be UE that are not in or on a mobile system.

As illustrated in FIG. 1, a first SL transmission 110 may be sent from the Tx UE 102 to the Rx UE 104. This transmission may include a CSI-RS in a combined PSCCH/PSSCH. The first SL transmission 110 may be a unicast transmission between the Tx UE 102 and the Rx UE 104. The first SL transmission 110 may have been previously configured as between the Tx UE 102 and the Rx UE 104 using SL communication (e.g., PC5-Radio Resource Control (PC5-RRC) signaling having the configuration as sent from the Tx UE 102 to the Rx UE 104). The use of the CSI-RS may be enabled or disabled by this such configuration information.

The Rx UE 104 is capable of measuring the CSI-RS once the first SL transmission 110 is received. The Rx UE 104 is further capable of sending a second SL transmission 112 that contains CSI reporting in a (second) combined PSCCH/PSSCH, whereby information regarding the CSI-RS (corresponding to the measurement of the CSI-RS by the Rx UE 104) is sent by the Rx UE 104 back to the Tx UE 102. The Tx UE 102 may trigger this CSI reporting using sidelink control information (SCI) included in the combined PSCCH/PSSCH that contains the CSI-RS.

In such embodiments, the location of the CSI-RS in the time domain may be understood by the Rx UE 104 to be the slot where the CSI trigger is received from the Tx UE 102. The location of the CSI-RS in the frequency domain may be understood to be within the physical resource blocks (PRBs) that are scheduled for use by the combined PSCCH/PSSCH in that same slot.

In some embodiments, the described triggering behavior for the SCI reporting may be aperiodic in nature. The contents of the CSI reporting may include one or more of a rank indicator (RI) and a channel quality index (CQI), which may then be used by the Tx UE 102 for link adaptation and/or multiple input multiple output (MIMO) precoding relative to subsequent SL transmission(s) from the Tx UE 102 to the Rx UE 104 (as is illustrated in FIG. 1). The CQI value may be generated based on, for example, a modulation and coding scheme (MCS) table known at the Rx UE 104. The RI and/or CQI values may be reported in a medium access control control element (MAC CE) carried with the combined PSCCH/PSSCH of the second SL transmission 112.

It may be that the Tx UE 102 does not issue multiple CSI triggers within a single CSI report window of the unicast session between the Tx UE 102 and the Rx UE 104. A latency bound for a CSI report (e.g., that controls the CSI report window length relative to the CSI trigger) may be signaled from the Tx UE 102 to the Rx UE 104 (e.g., via PC5-RRC signaling) such that the Rx UE 104 can ensure that transmissions of CSI reports by the Rx UE 104 to the Tx UE 102 occur within the CSI report window.

### Embodiments of Uu Beam Reporting

In some embodiments, a UE may perform layer 1 (L1) reference signal received power (RSRP) (L1-RSRP) reporting with a base station. In such cases, one or more channel measurement resources (CMRs) in the form of one or more synchronization signaling blocks (SSBs) and/or one or more CSI-RSs (e.g., one port CSI-RSs for beam management (BM) and/or two port CSI-RSs for BM) may be included in transmission(s) from the base station to the UE. Each of these CMRs may correspond (e.g., be sent on) to a beam used by the base station to communicate with the UE. The L1-RSRP of these CMRs may be measured by the UE. The UE may then generate an L1-RSRP report relating the measured L1-RSRP of one or more of the CMRs and transmit this report to the base station. In embodiments, up to 64 CMRs can be configured to be reported in one L1-RSRP report.

Further, both group-based and/or non-group-based L1-RSRP reporting may be supported. For group-based L1-RSRP reporting, it may be that the L1-RSRP for two CMRs is reported, where the UE can receive each CMR on its corresponding beam simultaneously. For non-group-based L1-RSRP reporting, a number of the CMRs for which to include L1-RSRP measurements in the L1-RSRP report may be configured by an RRC parameter (e.g., *nrofReportedRsForRSRP,* having possible candidate values of one, two, three, or four).

Such L1-RSRP report(s) may be triggered by the base station. An aperiodic L1-RSRP report may be triggered using downlink control information (DCI) format 0_1 or 0_2. Semi-persistent L1-RSRP reporting may be triggered by a MAC CE. Periodic L1-RSRP reporting may be configured by RRC.

In some embodiments, a UE may perform L1 signal to interference and noise ratio (SINR) (L1-SINR) reporting with a base station. In such cases, one or more CMRs in the form of one or more SSBs and/or one or more CSI-RSs (e.g., one port CSI-RSs for BM and/or two port CSI-RSs for BM) may be included in transmission(s) from the base station to the UE. Each of these CMRs may correspond to a beam used by the base station to communicate with the UE. Further, interference measurement resources (IMRs) used relative to these CMRs may include a channel statin information interference measurement resource (CSI-IM) (e.g., a zero power (ZP) CSI-RS). In some embodiments, a 1 port non-zero power (NZP) CSI-RS having a density of three resource elements per resource block may be used as an IMR. For these cases, there may be no interference emulation, and the UE may be required only to measure a received signal strength indicator (RSSI) as interference. A UE may calculate interference based on RSSI for both CSI-IM and NZP CSI-RS/NZP-IMR.

The L1-SINR of the CMRs (relative to the IMRs) may accordingly be measured by the UE. The UE may then generate an L1-SINR report relating the measured L1-SINR of one or more of the CMRs and transmit this report to the base station. In embodiments, up to 64 CMRs can be configured to be reported in one L1-SINR report.

Further, both group-based and/or non-group-based L1-SINR reporting may be supported. For group-based L1-SINR reporting, it may be that the L1-SINR for two CMRs is reported, where the UE can receive the each CMRs on its corresponding beam simultaneously. For non-group-based L1-SINR reporting, a number of the CMRs for which to include L1-SINR measurements in the L1-SINR report may be configured by an RRC parameter (e.g., *nrofReportedRsForSINR,* having possible candidate values of one, two, three, or four).

### Embodiments of SL Beam Reporting

Returning now to FIG. 1, embodiments disclosed herein discuss aspects of SL beam reporting between a Tx UE 102 and an Rx UE 104. Such embodiments may go beyond the reporting of RI/CQI as previously described in relation to FIG. 1, in that the first SL transmission 110 is configured to enable the Rx UE 104 to (also) report information that is particular to one or more of multiple Tx beams used by the Tx UE 102.

For example, in some embodiments, the Tx UE 102 may generate and send one or more CSI-RSs as part of the first SL transmission 110 (e.g., in a combined PSCCH/PSSCH). Each of these one or more CSI-RSs may be transmitted within the combined PSCCH/PSSCH on a corresponding one of one or more Tx beams of a beamforming used by the Tx UE 102 used to communicate with the Rx UE 104 (and note that such beams on which the one or more CSI-RSs are sent may be different than a Tx beam used by the Tx UE 102 to transmit the (rest of the) combined PSCCH/PSSCH itself). Once received at the Rx UE 104, the one or more CSI-RSs may be measured by the Rx UE 104. Examples of measurements that may be so taken include measuring an RSRP of the one or more CSI-RSs and/or measuring a SINR for the CSI-RSs, etc.

The first SL transmission 110 may include SCI that triggers beam measurement and beam reporting by the Rx UE 104 based on the CSI-RSs provided in the first SL transmission 110.

The second SL transmission 112 includes CSI reporting corresponding to the multiple CSI-RSs based on the measurements of the multiple CSI-RSs at the Rx UE 104. For example, measured L1-RSRP and/or L1-SINR values for one, some, or all of the multiple CSI-RSs may be included in this CSI reporting. Alternatively or additionally, an indication of one, some or all of a number X of the strongest CSI-RSs (e.g., CSI-RSs with the highest measured L1-RSRP and/or L1-SINR values) may be given.

Because of the correspondence between beams used to send the CSI-RSs and the CSI-RSs themselves, the Tx UE 102 is enabled (upon receiving the second SL transmission 112) to make conclusions regarding one or more of the beams. For example, if the second SL transmission 112 includes CSI reporting that indicates a given CSI-RS of the one or more CSI-RSs corresponds to a strongest/highest RSRP/SINR measured value, the Tx UE 102 can conclude accordingly that the beam used to send that given CSI-RS to the Rx UE 104 is a best beam to use for future transmissions to the Rx UE 104.

Herein, this CSI reporting that includes CSI-RS related information that can be related back to one or more individual beams by the Tx UE 102 in the manner described herein may be referred to as "beam reporting," and an instance of such CSI reporting may accordingly be referred to herein as a "beam report."

### Embodiments for Configuration of SL Beam Measurement and Beam Reporting

In some embodiments, configurations between a Tx UE 102 and an Rx UE 104 for beam measurement and/or beam reporting on SL may be according to SL signaling (e.g., a PC5-RRC message) between the Tx UE 102 and the Rx UE 104. In some embodiments, configurations between a Tx UE 102 and a Rx UE 104 for beam measurement and/or beam reporting on SL may be configured and/or pre-configured (e.g., by a base station, or by a peer UE) to either/both of the Tx UE 102 and the Rx UE 104 according to the resource pool being used for SL communication.

In some embodiments, higher layer signaling is transmitted by the Tx UE 102 to the Rx UE 104 to enable and/or disable beam measurement and beam reporting by the Rx UE 104. In such embodiments, it may be that the higher layer signaling controls the beam measurement and beam reporting of the Rx UE 104 according to one or more parameters found in one or more information elements (IEs) of the higher layer signaling. For example, it is contemplated that one or more of a "SidelinkPreconfigNR" IE, an "SL-ConfigCommonNR" IE, and an "SL-PHY-MAC-RLC" IE may include a parameter that indicates to the UE whether or not to perform beam measurement and beam reporting. It is contemplated that the parameter from such an IE that the Rx UE 104 uses to determine whether to perform the beam measurement and beam reporting may be, for example, an *sl-CSI-Acquisition* parameter (as may already exist within such IEs). Alternatively, another parameter could be used (e.g., such as a *sl-BM* parameter, an *sl-LIRSRP-Acquisition* parameter, and/or an *sl-L1sinr-Acquisition* parameter, or some other type of parameter) within such IEs to make this indication to the Rx UE 104. It is contemplated that in some embodiments, the use of this parameter in this manner may also enable one of CQI reporting and RI reporting alongside/with/in addition to the beam reporting.

In some embodiments, higher layer signaling is transmitted by the Tx UE 102 to the Rx UE 104 to configure beam measurement and beam reporting that is to be performed by the Rx UE 104. For example, an IE of the higher layer signaling may have a parameter that indicates whether the beam measurement comprises an SINR measurement or an RSRP measurement. In such cases, it may be that an "SL-CSI-ReportConfig" IE includes a *reportQuantity* parameter that selects whether the RSRP measurement or the SINR measurement is used. This *reportQuantity* parameter could also be used to indicate that RI and/or CQI values are to be reported.

As another example, an IE of the higher layer signaling may specify one or more time and frequency locations for one or more CSI-RSs in the combined PSCCH/PSSCH to be received that are to be used for the beam measurement and beam reporting. In such cases, it may be that an "SL-CSI-RS-Config" IE includes this information.

As another example, one or more IE of the higher layer signaling may specify one or more identifiers (IDs) identifying a plurality of CSI-RSs within a slot to be used for the beam measurement. For example, each of a one or more "SL-CSI-ReportConfig" IEs may include multiple CSI-RS resource IDs and/or one or more CSI-RS resource set IDs corresponding to the desired CSI-RSs in order to make the identification.

As another example, an IE of the higher layer signaling may specify one or more of a periodicity associated with the beam measurement and beam reporting, a timer associated with the beam measurement and beam reporting, an indication of a triggering event for the beam measurement and beam reporting, and a report configuration identifier (ID) corresponding to the beam measurement and beam reporting.

In some embodiments, higher layer signaling is transmitted by the Tx UE 102 to the Rx UE 104 to indicate a latency bound for beam reporting by the Rx UE 104. This latency bound may represent a maximum amount of time that is allowed between a transmission (e.g., a combined PSCCH/PSSCH) containing a trigger of a beam report (e.g., as may be found in CSI of the combined PSCCH/PSSCH) and the transmission of the corresponding beam report back to the Tx UE 102. Accordingly, the Rx UE 104 may be enabled to ensure that the triggered beam report is sent to the Tx UE 102 within this amount of time.

This latency bound may be given in terms of a number of slots. This latency bound may be found in an "RRCReconfigurationSidelink" IE. In some cases, an *sl-LatencyBoundCSI-Report* parameter may be used to indicate this latency bound (in addition to indicating a latency bound for any CQI/RI reporting). In some cases, a different parameter may instead be used. For example, an *sl-LatencyBoundRSRP-Report* or *sl-LatencyBoundSINR-Report* parameter may be so used.

### Embodiments for Triggering SL Beam Reporting

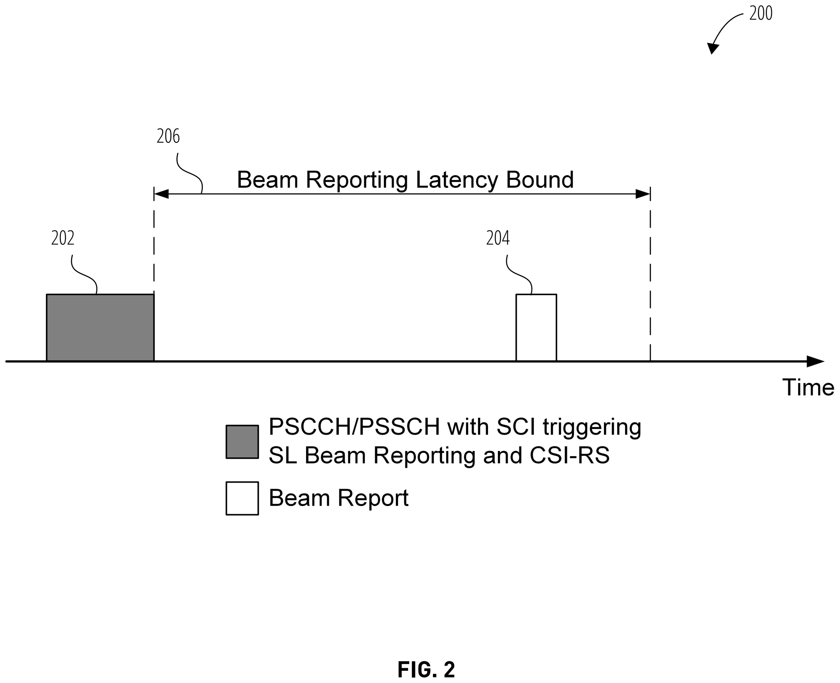

FIG. 2 illustrates a diagram 200 of aperiodic triggering of a SL beam report, according to embodiments discussed herein. A Tx UE 102 may send a combined PSCCH/PSSCH 202 to an Rx UE 104. As illustrated, this combined PSCCH/PSSCH 202 may include SCI that triggers SL beam reporting, along with one or more CSI-RSs that are to be reported on. The Rx UE 104 may correspondingly measure the one or more CSI-RSs. Then, in response to the SCI of the combined PSCCH/PSSCH 202 that triggered the beam reporting, the Rx UE 104 may send a beam report 204 corresponding to the measurements of the one or more CSI-RSs of the combined PSCCH/PSSCH 202 to the Tx UE 102. As illustrated, the beam report 204 may occur within a beam reporting latency bound 206, which may have been specified in higher layer signaling between the Tx UE 102 and the Rx UE 104 in the manner described above.

Note that while FIG. 2 illustrates the beam reporting latency bound 206 as being measured from the end of the combined PSCCH/PSSCH 202, it is contemplated that the beam reporting latency bound (e.g., as used in various embodiments herein) might, in other cases, be measured from the beginning of a combined PSCCH/PSSCH, be measured from a beginning or end of a slot carrying a combined PSCCH/PSSCH, etc.

The SCI of the combined PSCCH/PSSCH 202 may include an indication for the Rx UE 104 that the one or more one or more CSI-RSs have been transmitted within the combined PSCCH/PSSCH 202. This SCI may further indicate a SL CSI report configuration ID that identifies a SL CSI report configuration to the Rx UE 104. Based on the identified SL CSI report configuration, the Rx UE 104 may determine the location of the one or more CSI-RSs within the combined PSCCH/PSSCH 202, and/or the proper manner of reporting on the one or more CSI-RSs in the beam report 204. For example, the SL CSI report configuration may correspond to the case where the beam report 204 is to be based on L1-RSRP measurement of the one or more CSI-RSs, or may correspond to the case where the beam report 204 is to be based on L1-SINR measurement of the one or more CSI-RSs, etc.

In some cases, the SL CSI report configuration ID is indicated in stage 1 of the SCI of the combined PSCCH/PSSCH 202. It may be that bits of the stage 1 SCI that are reserved for indicating the SL CSI report configuration ID are used. The indicated SL CSI report configuration ID may be for one of multiple (e.g., up to four) SL CSI report configurations that are supported as between the Tx UE 102 and the Rx UE 104.

In some cases, the SL CSI report configuration ID is indicated in stage 2 of the SCI of the combined PSCCH/PSSCH 202. In some of these cases the SCI may be of format 2-A. In such cases, a *CSI request* field may be used to trigger both SL CQI/RI and/or SL beam measurement and beam reporting. In some of these cases, a different SCI format may be used (e.g., a format 2-D). In such cases, it may be that a *CSI_request* field is used to trigger SL CQI/RI reporting, and a separate field (such as an *RSRP_request* or a *SINR_request*) field may be used to trigger the SL beam measurement and beam reporting.

In some embodiments, the SL CSI report configuration ID identifies the one or more CSI-RSs that have been included in the combined PSCCH/PSSCH 202 and that are for beam management and beam reporting by indicating one or more CSI-RS resource sets corresponding to the one or more CSI-RSs. In such cases, any CSI-RS within a same CSI-RS resource set may be transmitted by the Tx UE 102 using a same antenna port. Such embodiments may be useful for the case where, for example, the Rx UE 104 is to use the one or more CSI-RSs to perform its own Rx beam refinement.

In some embodiments, one or more CSI-RSs that have been included in the combined PSCCH/PSSCH 202 and that are for beam management and beam reporting may include CSI-RS repetitions (where two or more identical CSI-RSs are used). For example, the one or more CSI-RSs may include CSI-RS repetitions across a number (more than one) of symbols. Such embodiments may be useful for the case where, for example, the Rx UE 104 is to use the one or more CSI-RSs to perform its own Rx beam refinement.

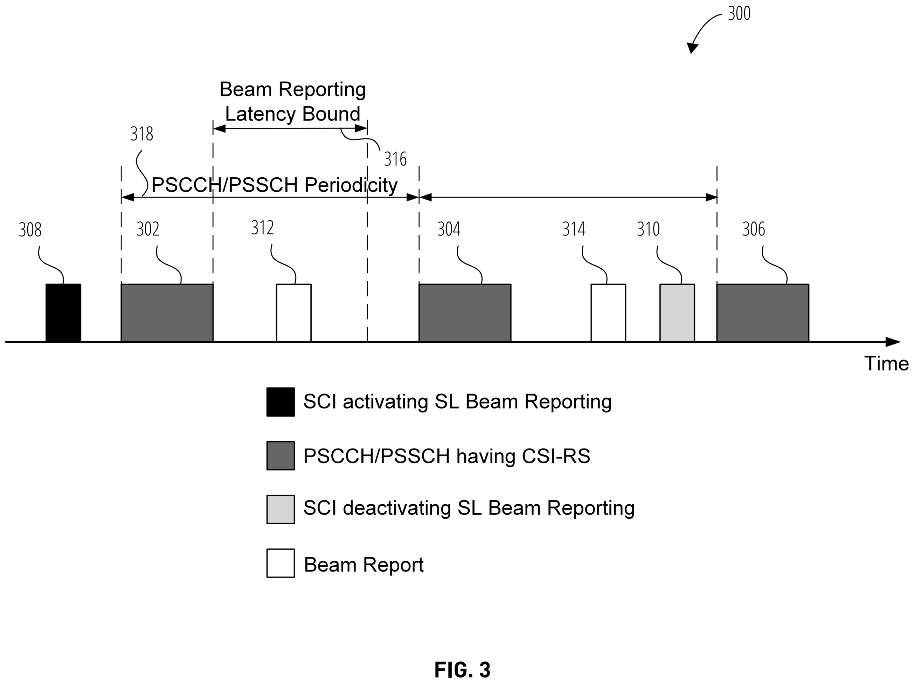

FIG. 3 illustrates a diagram 300 of periodic (semi-persistent) triggering of SL beam reporting, according to embodiments discussed herein. It may be that combined PSCCH/PSSCH transmissions having one or more CSI-RS that can be used for beam measurement and beam reporting are configured to be periodically transmitted between the Tx UE 102 and the Rx UE 104. In FIG. 3, a first combined PSCCH/PSSCH 302, a second combined PSCCH/PSSCH 304, and a third combined PSCCH/PSSCH 306 of such periodic combined PSSCH/PSSCH transmissions as configured between the Tx UE 102 and the Rx UE 104 have been illustrated. These may be sent according to a combined PSCCH/PSSCH periodicity 318.

FIG. 3 illustrates the case where SCI that is separate from the periodically configured combined PSCCH/PSSCHs having the one or more CSI-RSs for beam measurement and beam reporting is used to activate and/or deactivate SL beam reporting by the Rx UE 104. For example, the first SCI 308 is used to activate beam reporting at the Rx UE 104. The first SCI 308 may indicate the timing of the first of the periodic combined PSCCH/PSSCH transmissions for which beam reporting is activated using a time gap indication. In FIG. 3, this indicated timing corresponds to the timing of the first combined PSCCH/PSSCH 302. Accordingly, the Rx UE 104 prepares and sends the first beam report 312 to the Tx UE 102 based on its measurements of the one or more CSI-RSs found in the first combined PSCCH/PSSCH 302. The first beam report 312 may be within a beam reporting latency bound 316 for the first combined PSCCH/PSSCH 302 that was indicated by higher layer signaling between the Tx UE 102 and the Rx UE 104, as discussed above.

Further, consistent with the enabling in the first SCI 308, the Rx UE 104 also prepares and sends the second beam report 314 to the Tx UE 102 based on its measurements of the one or more CSI-RSs found in the second combined PSCCH/PSSCH 304. The second beam report 314 may be within a beam reporting latency bound applicable to the second combined PSCCH/PSSCH 304 (not illustrated, but which may be the same as the beam reporting latency bound 316 as configured by the previously discussed higher layer signaling).

As illustrated, after the second beam report 314, the Tx UE 102 then sends a second SCI 310 that deactivates the SL beam reporting by the Rx UE 104. The first SCI 308 may indicate the timing of the first of the periodic combined PSCCH/PSSCH transmissions for which beam reporting is deactivated using a time gap indication. In FIG. 3, this indicated timing corresponds to the timing of the third combined PSCCH/PSSCH 306. Accordingly, the Rx UE 104 does not prepare and/or send a beam report to the Tx UE 102 corresponding to the third combined PSCCH/PSSCH 306 that occurs after this second SCI 310.

In alternative embodiments similar to FIG. 3, it may be that the combined PSCCH/PSSCH transmissions that are configured to be periodically transmitted between the Tx UE 102 and the Rx UE 104 only include one or more CSI-RSs that can be used for beam measurement and beam reporting during the time period during for which beam reports are being prepared and sent by the Rx UE 104. Otherwise, the Tx UE 102 may not include CSI-RSs in combined PSCCH/PSSCH outside this time period.

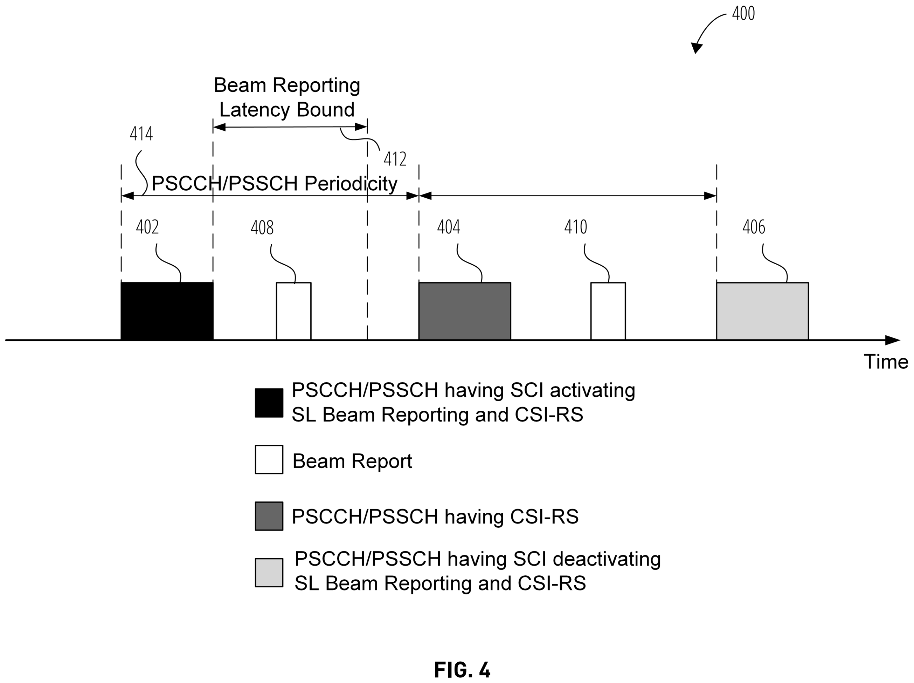

FIG. 4 illustrates a diagram 400 of periodic (semi-persistent) triggering of SL beam reporting, according to embodiments discussed herein. It may be that combined PSCCH/PSSCH transmissions having one or more CSI-RS that can be used for beam measurement and beam reporting are configured to be periodically transmitted between the Tx UE 102 and the Rx UE 104. In FIG. 4, a first combined PSCCH/PSSCH 402, a second combined PSCCH/PSSCH 404, and a third combined PSCCH/PSSCH 406 of such periodic combined PSSCH/PSSCH transmissions as configured between the Tx UE 102 and the Rx UE 104 have been illustrated. These may be sent according to a combined PSCCH/PSSCH periodicity 414.

FIG. 4 illustrates the case where SCI of the periodically configured combined PSCCH/PSSCHs having the one or more CSI-RSs for beam measurement and beam reporting is used to activate and/or deactivate SL beam reporting by the Rx UE 104. For example, the SCI of the first combined PSCCH/PSSCH 402 is used to indicate the activation of beam reporting at the Rx UE 104. Accordingly, the Rx UE 104 prepares and sends the first beam report 408 to the Tx UE 102 based on its measurements of the one or more CSI-RSs found in the first combined PSCCH/PSSCH 402. The first beam report 408 may be within a beam reporting latency bound 412 for the first combined PSCCH/PSSCH 402 that was indicated by higher layer signaling between the Tx UE 102 and the Rx UE 104, as discussed above.

Further, consistent with the enabling in the first combined PSCCH/PSSCH 402, the Rx UE 104 also prepares and sends the second beam report 410 to the Tx UE 102 based on its measurements of the one or more CSI-RSs found in the second combined PSCCH/PSSCH 404. The second beam report 410 may be within a beam reporting latency bound applicable to the second combined PSCCH/PSSCH 404 (not illustrated, but which may be the same as the beam reporting latency bound 412 as configured by the previously discussed higher layer signaling).

Finally, the SCI of the first combined PSCCH/PSSCH 402 is used to indicate the deactivation of beam reporting at the Rx UE 104. Accordingly, the Rx UE 104 does not prepare and/or send a beam report to the Tx UE 102 corresponding to the third combined PSCCH/PSSCH 406.

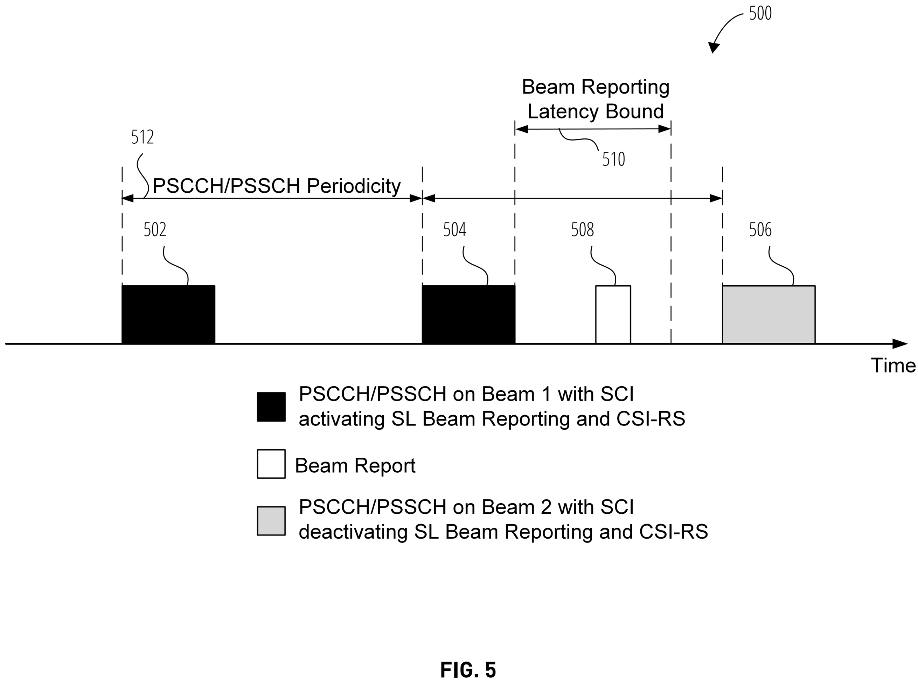

FIG. 5 illustrates a diagram 500 of event-based triggering of SL beam reporting, according to embodiments discussed herein. It may be that combined PSCCH/PSSCH transmissions having one or more CSI-RSs that can be used for beam measurement and beam reporting are configured to be periodically transmitted between the Tx UE 102 and the Rx UE 104. In FIG. 5, a first combined PSCCH/PSSCH 502, a second combined PSCCH/PSSCH 504, and a third combined PSCCH/PSSCH 506 of such periodic combined PSSCH/PSSCH transmissions as configured between the Tx UE 102 and the Rx UE 104 have been illustrated. These may be sent according to a combined PSCCH/PSSCH periodicity 512.

The diagram 500 illustrates that the first combined PSCCH/PSSCH 502 and the second combined PSCCH/PSSCH 504 are sent on a first beam ("Beam 1") (e.g., Beam 1 is the serving beam of the first combined PSCCH/PSSCH 502 and the second combined PSCCH/PSSCH 504), and the third combined PSCCH/PSSCH 506 is sent on a second beam ("Beam 2") (e.g., Beam 2 is the serving beam of the third combined PSCCH/PSSCH 506). Note that the descriptions herein of a combined PSCCH/PSSCH being sent on a particular "serving" beam should be understood to refer to portions of the combined PSCCH/PSSCH other than any CSI-RSs of the combined PSCCH/PSSCH that are sent on (different) corresponding beams to enable beam measurement and beam reporting as has been described herein. The "serving beam" of a combined PSCCH/PSSCH may in such cases be, for example, the beam that is used to transmit the SCI of the combined PSCCH/PSSCH, and/or the beam that is used to transmit portions of the combined PSCCH/PSSCH that are not CSI-RSs (and note that in some cases, these may be the same beam).

In the example of FIG. 5, the Rx UE 104 sends the beam report 508 in response to an event that is detected at the Rx UE 104 based on one or more beam measurements taken on one or more combined PSCCH/PSSCHs. For example, the beam report 508 may be sent by the Rx UE 104 to the Tx UE 102 in response to an event detected based on a beam measurement on the second combined PSCCH/PSSCH 504. Note that the beam report 508 may be within a beam reporting latency bound 510 for the first combined PSCCH/PSSCH 502 that was indicated by higher layer signaling between the Tx UE 102 and the Rx UE 104, as discussed above.

A first example of an event that triggers the beam report 508 may be that a measured quality (e.g., L1-RSRP and/or L1-SINR) of the serving beam of the second combined PSCCH/PSSCH 504 (e.g., Beam 1) is below (or at or below) a threshold. The beam report 508 may accordingly indicate to the Tx UE 102 that this serving beam is below (or at or below) the threshold.

A second example of event that triggers the beam report 508 may be that a measured quality (e.g., L1-RSRP and/or L1-SINR) of a non-serving beam of the second combined PSCCH/PSSCH 504 (e.g., a beam other than Beam 1) is above (or at or above) a threshold. The beam report 508 may accordingly indicate to the Tx UE 102 that this non-serving beam is above (or at or above) the threshold.

A third example of event that triggers the beam report 508 may be that a measured quality (e.g., L1-RSRP and/or L1-SINR) of a non-serving beam for the second combined PSCCH/PSSCH 504 (e.g., a beam other than Beam 1) is greater than (or greater than or equal to) a second measured quality of a serving beam of the second combined PSCCH/PSSCH 504 (e.g., Beam 1) by an offset amount. The beam report 508 may accordingly indicate to the Tx UE 102 that this non-serving beam is better than the serving beam by at least (or at least more than) the offset amount.

A fourth example of event that triggers the beam report 508 may be that a measured quality of a serving beam of the second combined PSCCH/PSSCH 504 (e.g., Beam 1) is below (or at or below) a first threshold, and a second measured quality of another beam that is not the current serving beam of the second combined PSCCH/PSSCH 504 (e.g., a beam other than Beam 1) is above (or at or above) a second threshold. The beam report 508 may accordingly indicate to the Tx UE 102 that the measured quality of the serving beam is below (or at or below) the first threshold, and that the second measured quality of the non-serving beam is above (or at or above) a second threshold

As illustrated in FIG. 5, based on the information provided in the beam report 508, the Tx UE 102, switches the serving beam for the combined PSCCH/PSSCH transmissions from the old beam (Beam 1) to another beam (Beam 2) (e.g., where the new beam may be as reported in the beam report 508, in instances where the beam report 508 includes information about the new beam, in the manner described above).

Note that the Rx UE 104 may also, in some embodiments, switch its Rx beam to correspond more closely to the transmission direction of the new Tx beam to be used by the Tx UE 102. This may be based on a use of multiple candidate Rx beams with the new Tx beam, with the ultimately selected Rx beam corresponding to, for example, the strongest measured quality value for the Tx beam, as has been described.

The Rx UE 104 may determine to check for one or more of the described events based on the resource pool being used for the SL communication between the Tx UE 102 and the Rx UE 104. For example, the use of the selected event(s) may be based on a configuration (e.g., received from the Tx UE 102) corresponding to the particular resource pool, and/or a pre-configuration of the Rx UE 104 corresponding to the particular resource pool.

In other cases, the Rx UE 104 may determine to check for one or more of the described events based on a received configuration (e.g., in a PC5-RRC signaling from the Tx UE 102). Such a received configuration may not (necessarily) be related to the resource pool being used for SL communications between the Tx UE 102 and the Rx UE 104.

### Embodiments for SL Beam Reporting using UE Zone Information

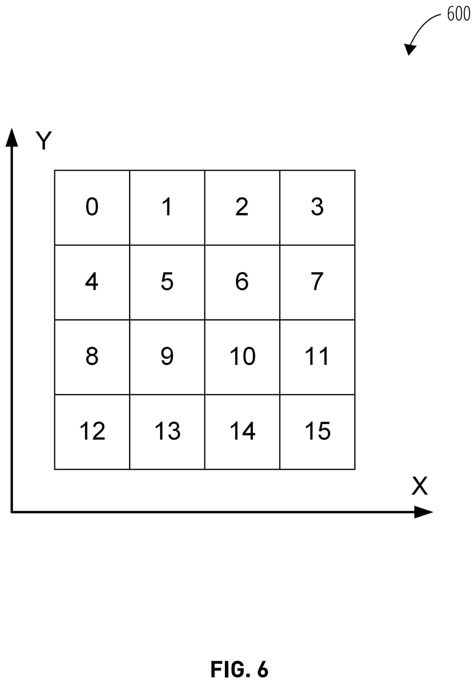

FIG. 6 is visualization 600 of a set of zones using zone IDs 0 through 15, as may be defined by a resource pool configuration for the SL resource pool that is used by the Tx UE 102 and the Rx UE 104 to perform SL communications, according to an embodiment. Based on the resource pool configuration, each of the Tx UE 102 and/or the Rx UE 104 may be capable of determining its own location as among all of the zones (e.g., may be able to determine the zone ID for the zone in which it is currently present). Zone information may be used within a SL beam reporting process as will now be described.

In a first embodiment, the Tx UE 102 may determine its own location (e.g., as within the zones). The Tx UE 102 may also receive, from the Rx UE 104, a zone ID for the zone in which the Rx UE 104 is present. Based on its own location and the zone ID for the Rx UE 104, the Tx UE 102 may determine one or more beams for the Rx UE 104 to measure. These beams may be one or more beams that the Tx UE 102 determines are expected to point from the location of the Tx UE 102 to the zone ID for the Rx UE 104. The Tx UE 102 may according transmit a combined PSCCH/PSSCH that contains one or more CSI-RS corresponding to (e.g., that are on) these one or more determined beams. The Rx UE 104 may respond with a beam report for the one or more beams.

In a second embodiment, the Tx UE 102 may determine its own location (e.g., as within the zones). The Tx UE 102 may also provide the Rx UE 104 with a zone ID for the zone in which the Tx UE 102 is present. Based on its own location and the zone ID for the Tx UE 102, the Rx UE 104 may determine one or more beams that it (the Rx UE 104) should report on. These beams may be one or more beams that the Rx UE 104 determines are expected to point from the zone ID for the Tx UE 102 to the location of the Rx UE 104. When a combined PSCCH/PSSCH having one or more CSI-RS is sent by the Tx UE 102 to the Rx UE 104, the Rx UE 104 may measure the CSI-RSs therein. Then the Rx UE 104 may then send a beam report to the Tx UE 102 that reports on strong beams from among the one or more beams that were identified based on the zone ID for the Tx UE 102 and the location of the Rx UE 104. In some cases, the measurement of the CSI-RSs may involve measurement of only CSI-RSs in the combined PSCCH/PSSCH that correspond to the beams that were previously determined by the Rx UE 104 to be reported on.

### Example Embodiments

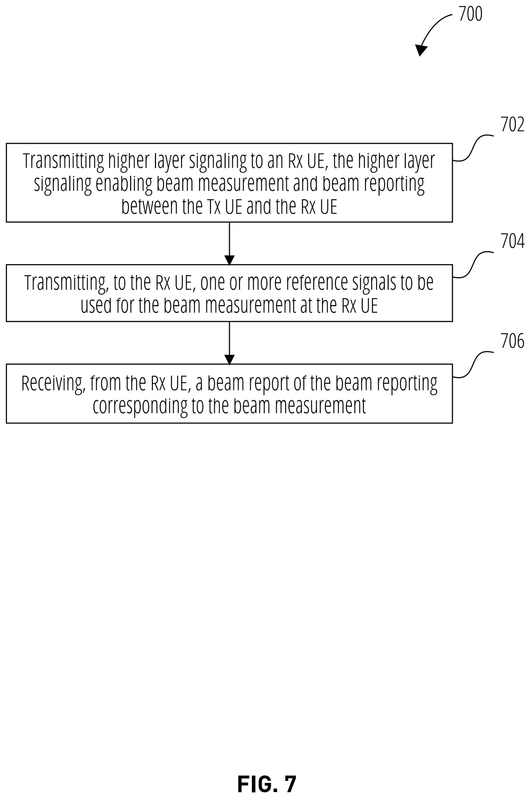

FIG. 7 illustrates a method 700 of a Tx UE for performing SL communications with an Rx UE, according to an embodiment. The method 700 includes transmitting 702 higher layer signaling to the Rx UE, the higher layer signaling enabling beam measurement and beam reporting between the Tx UE and the Rx UE.

The method 700 further includes transmitting 704, to the Rx UE, one or more reference signals to be used for the beam measurement at the Rx UE.

The method 700 further includes receiving 706, from the Rx UE, a beam report of the beam reporting corresponding to the beam measurement.

In some embodiments of the method 700, the beam measurement and beam reporting is enabled based on a parameter in one of a SidelinkPreconfigNR information element, a SL-ConfigCommonNR information element, and a SL-PHY-MAC-RLC information element. In some of these embodiments, the parameter is further configured to enable one of channel quality index (CQI) reporting and rank indicator (RI) reporting by the Rx UE.

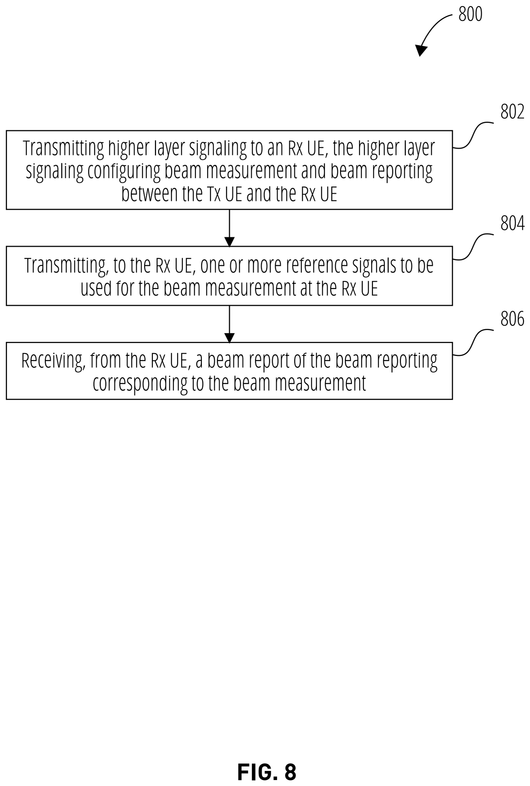

FIG. 8 illustrates a method 800 of a Tx UE for performing SL communications with an Rx UE, according to an embodiment. The method 800 includes transmitting 802 higher layer signaling to the Rx UE, the higher layer signaling configuring beam measurement and beam reporting between the Tx UE and the Rx UE.

The method 800 further includes transmitting 804, to the Rx UE, one or more reference signals to be used for the beam measurement at the Rx UE.

The method 800 further includes receiving 806, from the Rx UE, a beam report of the beam reporting corresponding to the beam measurement.

In some embodiments of the method 800, the higher layer signaling includes an information element having a parameter that indicates whether the beam measurement comprises a SINR measurement or a RSRP measurement.

In some embodiments of the method 800, the higher layer signaling includes an information element specifying one or more time and frequency locations for one or more CSI-RSs to be used for the beam measurement.

In some embodiments of the method 800, the higher layer signaling includes an information element specifying one or more identifiers identifying a plurality of CSI-RSs within a slot to be used for the beam measurement.

In some embodiments of the method 800, the higher layer signaling includes an information element specifying one or more of a periodicity associated with the beam measurement and beam reporting, a timer associated with the beam measurement and beam reporting, an indication of a triggering event for the beam measurement and beam reporting, and a report configuration ID corresponding to the beam measurement and beam reporting.

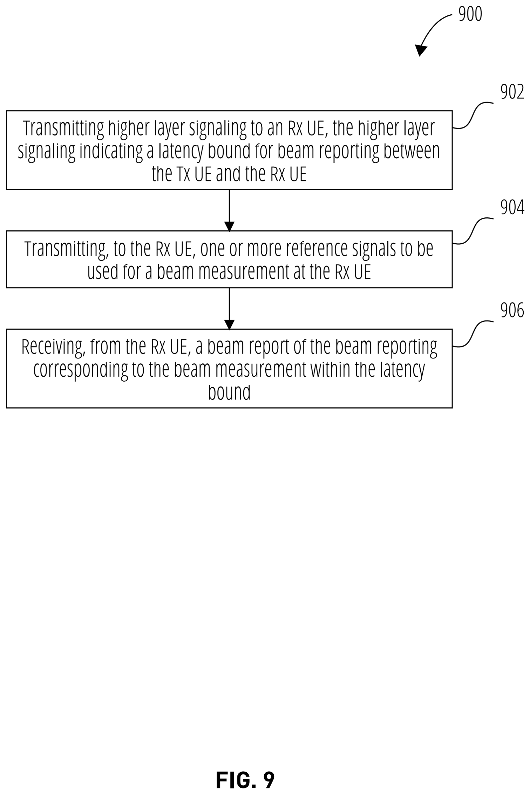

FIG. 9 illustrates a method 900 of a Tx user UE for performing SL communications with an Rx UE, according to an embodiment. The method 900 includes transmitting 902 higher layer signaling to the Rx UE, the higher layer signaling indicating a latency bound for beam reporting between the Tx UE and the Rx UE.

The method 900 further includes transmitting 904, to the Rx UE, one or more reference signals to be used for a beam measurement at the Rx UE.

The method 900 further includes receiving 906, from the Rx UE, a beam report of the beam reporting corresponding to the beam measurement within the latency bound.

In some embodiments of the method 900, the latency bound is indicated in terms of a number of slots.

In some embodiments of the method 900, the latency bound is indicated by a parameter in an RRCReconfigurationSidelink information element of the higher layer signaling.

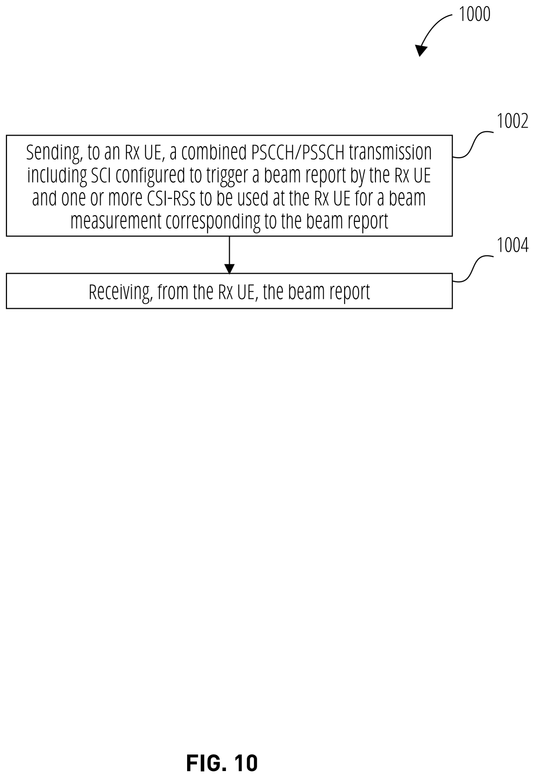

FIG. 10 illustrates a method 1000 of a Tx user UE for performing SL communications with an Rx UE, according to an embodiment. The method 1000 includes sending 1002, to the Rx UE, a combined PSCCH/PSSCH transmission including SCI configured to trigger a beam report by the Rx UE and one or more CSI-RSs to be used at the Rx UE for a beam measurement corresponding to the beam report.

The method 1000 further includes receiving 1004, from the Rx UE, the beam report.

In some embodiments of the method 1000, the SCI indicates that the combined PSCCH/PSSCH transmission comprises the one or more CSI-RSs.

In some embodiments of the method 1000, the SCI identifies a CSI report configuration defining a manner of performing the beam measurement and making the beam report. In some of these cases, the CSI report configuration is indicated using one or more bits of stage 1 of the SCI.

In some of these cases, the CSI report configuration is indicated in stage 2 of the SCI and the beam report is triggered by a field in the stage 2 of the SCI. In some such instances, the field is further configured to trigger one of CQI reporting and RI reporting by the Rx UE.

In some embodiments of the method 1000, each of the one or more CSI-RSs belongs to one of one or more CSI-RS resource sets, and each CSI-RS of a given CSI-RS resource set is sent on a same antenna port.

In some embodiments of the method 1000, the one or more of CSI-RSs comprises CSI-RS repetitions.

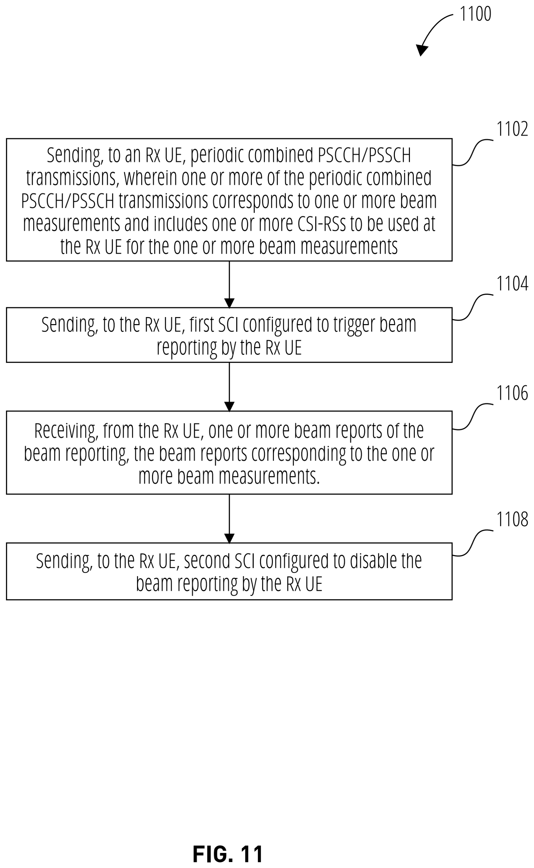

FIG. 11 illustrates a method 1100 of a Tx user UE for performing SL communications with an Rx UE, according to an embodiment. The method 1100 includes sending 1102, to the Rx UE, periodic combined PSCCH/PSSCH transmissions, wherein one or more of the periodic combined PSCCH/PSSCH transmissions corresponds to one or more beam measurements and includes one or more CSI-RSs to be used at the Rx UE for the one or more beam measurements.

The method 1100 further includes sending 1104, to the Rx UE, first SCI configured to trigger beam reporting by the Rx UE.

The method 1100 further includes receiving 1106, from the Rx UE, one or more beam reports of the beam reporting, the beam reports corresponding to the one or more beam measurements.

The method 1100 further includes sending 1108, to the Rx UE, second SCI configured to disable the beam reporting by the Rx UE.

In some embodiments of the method 1100, the first SCI indicates a timing of a first in time of the one or more of the periodic combined PSCCH/PSSCH transmissions corresponding to the one or more beam measurements.

In some embodiments of the method 1100, the second SCI indicates a timing of a one of the periodic combined PSCCH/PSSCH transmissions that does not correspond to a beam measurement.

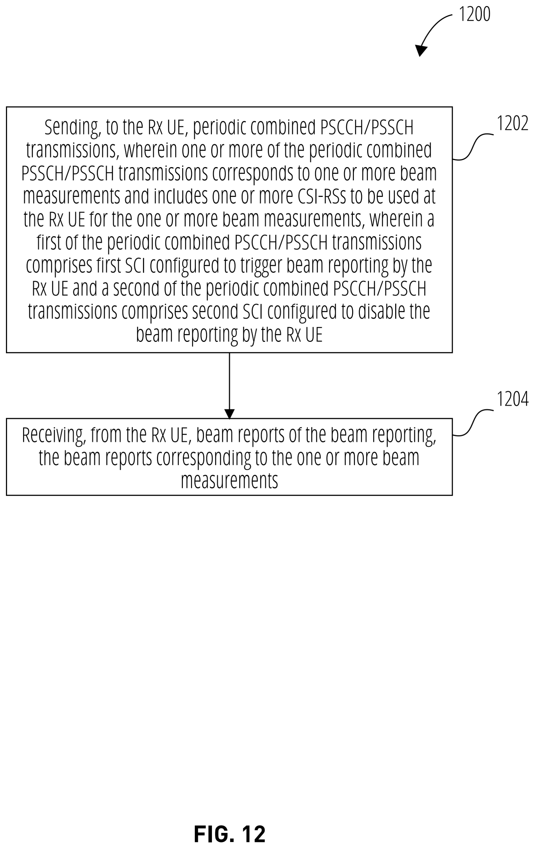

FIG. 12 illustrates a method 1200 of a Tx user UE for performing SL communications with an Rx UE, according to an embodiment. The method 1200 includes sending 1202, to the Rx UE, periodic combined PSCCH/PSSCH transmissions, wherein one or more of the periodic combined PSSCH/PSSCH transmissions corresponds to one or more beam measurements and includes one or more CSI-RSs to be used at the Rx UE for the one or more beam measurements, wherein a first of the periodic combined PSCCH/PSSCH transmissions comprises first SCI configured to trigger beam reporting by the Rx UE and a second of the periodic combined PSCCH/PSSCH transmissions comprises second SCI configured to disable the beam reporting by the Rx UE.

The method 1200 further includes receiving 1204, from the Rx UE, beam reports of the beam reporting, the beam reports corresponding to the one or more beam measurements.

In some embodiments of the method 1200, the first of the periodic combined PSCCH/PSSCH transmissions is one of the one or more of the periodic combined PSSCH/PSSCH transmissions corresponding to the one or more beam measurements.

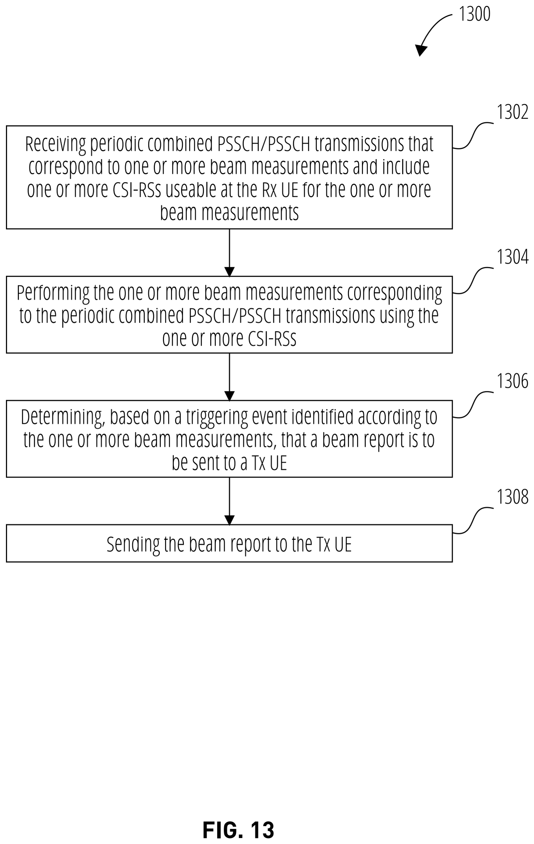

FIG. 13 illustrates a method 1300 of an Rx UE for performing SL communications with a Tx UE, according to an embodiment. The method 1300 includes receiving 1302 periodic combined PSSCH/PSSCH transmissions that correspond to one or more beam measurements and include one or more CSI-RSs useable at the Rx UE for the one or more beam measurements.

The method 1300 further includes performing 1304 the one or more beam measurements corresponding to the periodic PSSCH/PSSCH transmissions using the one or more CSI-RSs.

The method 1300 further includes determining 1306, based on a triggering event identified according to the one or more beam measurements, that a beam report is to be sent to the Tx UE.

The method 1300 further includes sending 1308 the beam report to the Tx UE.

In some embodiments of the method 1300, the triggering event is that a measured quality of a serving beam is below a threshold.

In some embodiments of the method 1300, the triggering event is that a measured quality of an inactive beam is above a threshold.

In some embodiments of the method 1300, the triggering event is that a first measured quality of a first beam is greater than a second measured quality of a serving beam by an offset amount.

In some embodiments of the method 1300, the triggering event is that a first measured quality of a serving beam is below a first threshold, and a second measured quality of another beam is above a second threshold.

In some embodiments of the method 1300, the triggering event is determined according to a resource pool used for the SL communications.

In some embodiments of the method 1300, the triggering event is configured to the Rx UE via SL RRC signaling performed with the Tx UE.

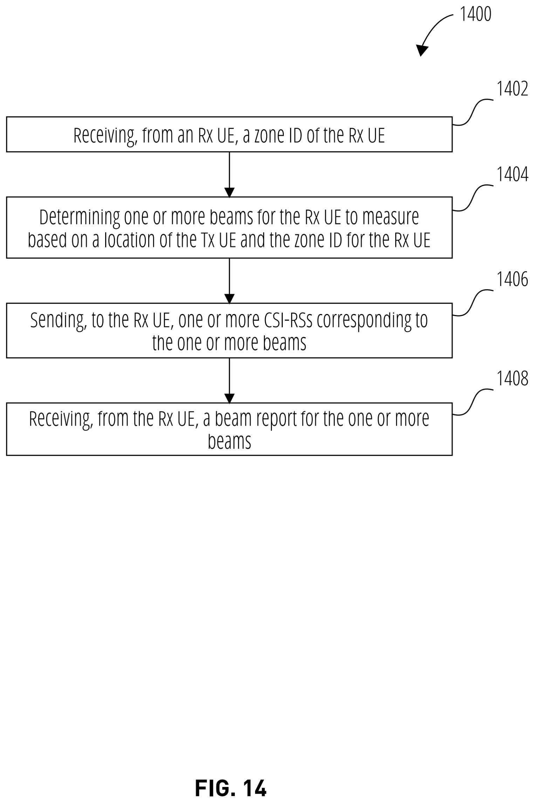

FIG. 14 illustrates a method 1400 of a Tx user UE for performing SL communications with an Rx UE, according to an embodiment. The method 1400 includes receiving 1402, from the Rx UE, a zone ID of the Rx UE.

The method 1400 further includes determining 1404 one or more beams for the Rx UE to measure based on a location of the Tx UE and the zone ID for the Rx UE.

The method 1400 further includes sending 1406, to the Rx UE, one or more CSI-RSs corresponding to the one or more beams.

The method 1400 further includes receiving 1408, from the Rx UE, a beam report for the one or more beams.

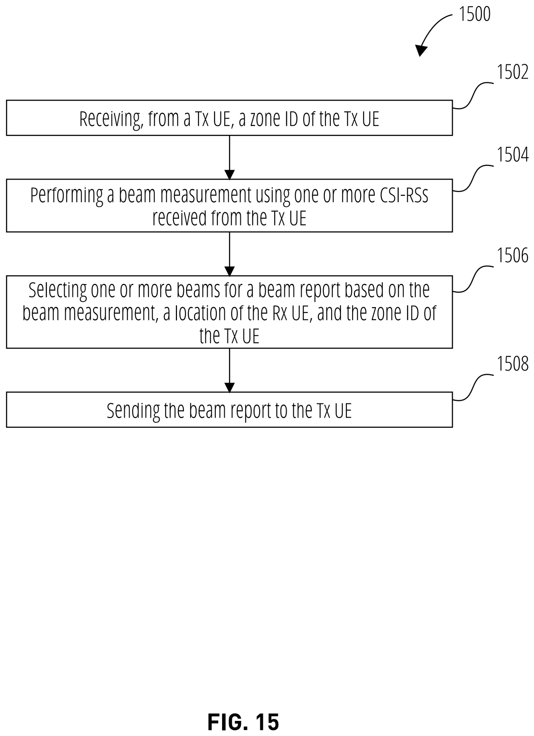

FIG. 15 illustrates a method of an Rx UE for performing SL communications with a Tx UE, according to an embodiment. The method 1500 includes receiving 1502, from the Tx UE, a zone ID of the Tx UE.

The method 1500 further includes performing 1504 a beam measurement using one or more CSI-RSs received from the Tx UE.

The method 1500 further includes selecting 1506 one or more beams for a beam report based on the beam measurement, a location of the Rx UE, and the zone ID of the Tx UE.

The method 1500 further includes sending 1508 the beam report to the Tx UE.

Embodiments contemplated herein include an apparatus comprising means to perform one or more elements of the method 700, the method 800, the method 900, the method 1000, the method 1100, the method 1200, the method 1300, the method 1400, and/or the method 1500. This apparatus may be, for example, an apparatus of a UE (such as one of the first wireless device 1702 or the second wireless device 1718 that is a UE, as described herein).

Embodiments contemplated herein include one or more non-transitory computer-readable media comprising instructions to cause an electronic device, upon execution of the instructions by one or more processors of the electronic device, to perform one or more elements of the method 700, the method 800, the method 900, the method 1000, the method 1100, the method 1200, the method 1300, the method 1400, and/or the method 1500. This non-transitory computer-readable media may be, for example, a memory of a UE (such as a memory 1706 or memory 1722 of one of the first wireless device 1702 or the second wireless device 1718 that is a UE, as described herein).

Embodiments contemplated herein include an apparatus comprising logic, modules, or circuitry to perform one or more elements of the method 700, the method 800, the method 900, the method 1000, the method 1100, the method 1200, the method 1300, the method 1400, and/or the method 1500. This apparatus may be, for example, an apparatus of a UE (such as one of the first wireless device 1702 or the second wireless device 1718 that is a UE, as described herein).

Embodiments contemplated herein include an apparatus comprising: one or more processors and one or more computer-readable media comprising instructions that, when executed by the one or more processors, cause the one or more processors to perform one or more elements of the method 700, the method 800, the method 900, the method 1000, the method 1100, the method 1200, the method 1300, the method 1400, and/or the method 1500. This apparatus may be, for example, an apparatus of a UE (such as one of the first wireless device 1702 or the second wireless device 1718 that is a UE, as described herein).

Embodiments contemplated herein include a signal as described in or related to one or more elements of the method 700, the method 800, the method 900, the method 1000, the method 1100, the method 1200, the method 1300, the method 1400, and/or the method 1500.

Embodiments contemplated herein include a computer program or computer program product comprising instructions, wherein execution of the program by a processor is to cause the processor to carry out one or more elements of the method 700, the method 800, the method 900, the method 1000, the method 1100, the method 1200, the method 1300, the method 1400, and/or the method 1500. The processor may be a processor of a UE (such as processor(s) 1704 or processor(s) 1720 of one of the first wireless device 1702 or the second wireless device 1718 that is a UE, as described herein). These instructions may be, for example, located in the processor and/or on a memory of the UE (such as a memory 1706 or memory 1722 of one of the first wireless device 1702 or the second wireless device 1718 that is a UE, as described herein).

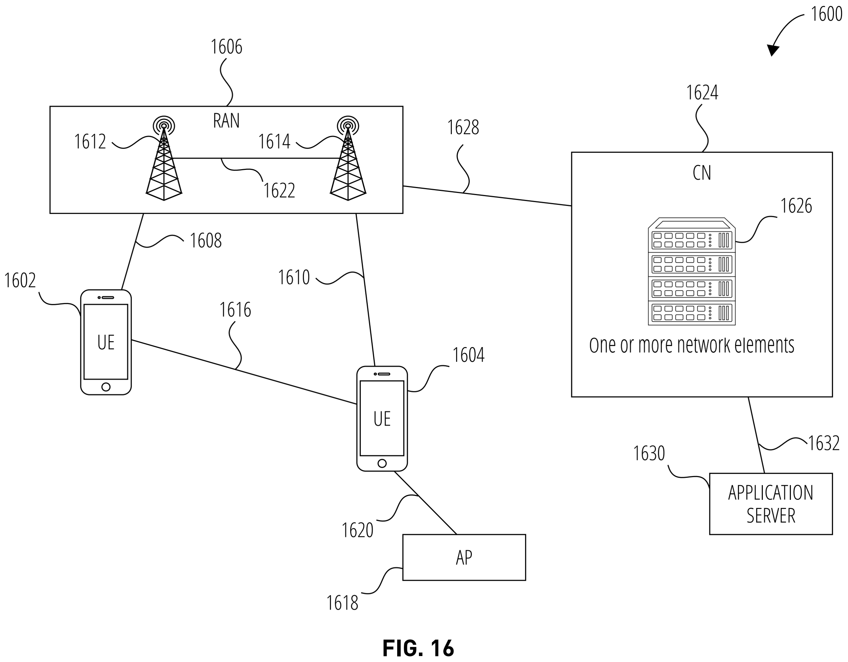

FIG. 16 illustrates an example architecture of a wireless communication system 1600, according to embodiments disclosed herein. The following description is provided for an example wireless communication system 1600 that operates in conjunction with the LTE system standards and/or 5G or NR system standards as provided by 3GPP technical specifications.

As shown by FIG. 16, the wireless communication system 1600 includes UE 1602 and UE 1604 (although any number of UEs may be used). In this example, the UE 1602 and the UE 1604 are illustrated as smartphones (e.g., handheld touchscreen mobile computing devices connectable to one or more cellular networks), but may also comprise any mobile or non-mobile computing device configured for wireless communication.

The UE 1602 and UE 1604 may be configured to communicatively couple with a RAN 1606. In embodiments, the RAN 1606 may be NG-RAN, E-UTRAN, etc. The UE 1602 and UE 1604 utilize connections (or channels) (shown as connection 1608 and connection 1610, respectively) with the RAN 1606, each of which comprises a physical communications interface. The RAN 1606 can include one or more base stations, such as base station 1612 and base station 1614, that enable the connection 1608 and connection 1610.

In this example, the connection 1608 and connection 1610 are air interfaces to enable such communicative coupling, and may be consistent with RAT(s) used by the RAN 1606, such as, for example, an LTE and/or NR.

In some embodiments, the UE 1602 and UE 1604 may also directly exchange communication data via a sidelink interface 1616. The UE 1604 is shown to be configured to access an access point (shown as AP 1618) via connection 1620. By way of example, the connection 1620 can comprise a local wireless connection, such as a connection consistent with any IEEE 802.11 protocol, wherein the AP 1618 may comprise a Wi-Fi^{®} router. In this example, the AP 1618 may be connected to another network (for example, the Internet) without going through a CN 1624.

In embodiments, the UE 1602 and UE 1604 can be configured to communicate using orthogonal frequency division multiplexing (OFDM) communication signals with each other or with the base station 1612 and/or the base station 1614 over a multicarrier communication channel in accordance with various communication techniques, such as, but not limited to, an orthogonal frequency division multiple access (OFDMA) communication technique (e.g., for downlink communications) or a single carrier frequency division multiple access (SC-FDMA) communication technique (e.g., for uplink and ProSe or sidelink communications), although the scope of the embodiments is not limited in this respect. The OFDM signals can comprise a plurality of orthogonal subcarriers.

In some embodiments, all or parts of the base station 1612 or base station 1614 may be implemented as one or more software entities running on server computers as part of a virtual network. In addition, or in other embodiments, the base station 1612 or base station 1614 may be configured to communicate with one another via interface 1622. In embodiments where the wireless communication system 1600 is an LTE system (e.g., when the CN 1624 is an EPC), the interface 1622 may be an X2 interface. The X2 interface may be defined between two or more base stations (e.g., two or more eNBs and the like) that connect to an EPC, and/or between two eNBs connecting to the EPC. In embodiments where the wireless communication system 1600 is an NR system (e.g., when CN 1624 is a 5GC), the interface 1622 may be an Xn interface. The Xn interface is defined between two or more base stations (e.g., two or more gNBs and the like) that connect to 5GC, between a base station 1612 (e.g., a gNB) connecting to 5GC and an eNB, and/or between two eNBs connecting to 5GC (e.g., CN 1624).

The RAN 1606 is shown to be communicatively coupled to the CN 1624. The CN 1624 may comprise one or more network elements 1626, which are configured to offer various data and telecommunications services to customers/subscribers (e.g., users of UE 1602 and UE 1604) who are connected to the CN 1624 via the RAN 1606. The components of the CN 1624 may be implemented in one physical device or separate physical devices including components to read and execute instructions from a machine-readable or computer-readable medium (e.g., a non-transitory machine-readable storage medium).

In embodiments, the CN 1624 may be an EPC, and the RAN 1606 may be connected with the CN 1624 via an S1 interface 1628. In embodiments, the S1 interface 1628 may be split into two parts, an S1 user plane (S1-U) interface, which carries traffic data between the base station 1612 or base station 1614 and a serving gateway (S-GW), and the S1-MME interface, which is a signaling interface between the base station 1612 or base station 1614 and mobility management entities (MMEs).

In embodiments, the CN 1624 may be a 5GC, and the RAN 1606 may be connected with the CN 1624 via an NG interface 1628. In embodiments, the NG interface 1628 may be split into two parts, an NG user plane (NG-U) interface, which carries traffic data between the base station 1612 or base station 1614 and a user plane function (UPF), and the S1 control plane (NG-C) interface, which is a signaling interface between the base station 1612 or base station 1614 and access and mobility management functions (AMFs).

Generally, an application server 1630 may be an element offering applications that use internet protocol (IP) bearer resources with the CN 1624 (e.g., packet switched data services). The application server 1630 can also be configured to support one or more communication services (e.g., VoIP sessions, group communication sessions, etc.) for the UE 1602 and UE 1604 via the CN 1624. The application server 1630 may communicate with the CN 1624 through an IP communications interface 1632.

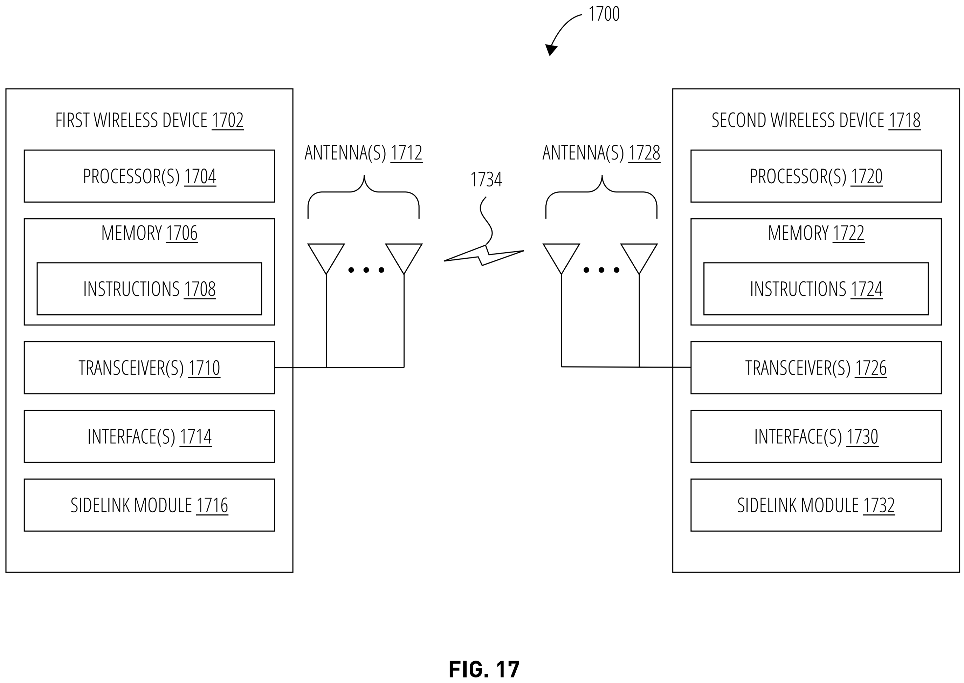

FIG. 17 illustrates a system 1700 for performing signaling 1734 between a first wireless device 1702 and a second wireless device 1718, according to embodiments disclosed herein. The system 1700 may be a portion of a wireless communications system as herein described. The first wireless device 1702 may be, for example, a UE of a wireless communication system. The second wireless device 1718 may be, for example, a UE of the wireless communication system.

The first wireless device 1702 may include one or more processor(s) 1704. The processor(s) 1704 may execute instructions such that various operations of the first wireless device 1702 are performed, as described herein. The processor(s) 1704 may include one or more baseband processors implemented using, for example, a central processing unit (CPU), a digital signal processor (DSP), an application specific integrated circuit (ASIC), a controller, a field programmable gate array (FPGA) device, another hardware device, a firmware device, or any combination thereof configured to perform the operations described herein.

The first wireless device 1702 may include a memory 1706. The memory 1706 may be a non-transitory computer-readable storage medium that stores instructions 1708 (which may include, for example, the instructions being executed by the processor(s) 1704). The instructions 1708 may also be referred to as program code or a computer program. The memory 1706 may also store data used by, and results computed by, the processor(s) 1704.

The first wireless device 1702 may include one or more transceiver(s) 1710 that may include radio frequency (RF) transmitter and/or receiver circuitry that use the antenna(s) 1712 of the first wireless device 1702 to facilitate signaling (e.g., the signaling 1734) to and/or from the first wireless device 1702 with other devices (e.g., the second wireless device 1718) according to corresponding RATs.

The first wireless device 1702 may include one or more antenna(s) 1712 (e.g., one, two, four, or more). For embodiments with multiple antenna(s) 1712, the first wireless device 1702 may leverage the spatial diversity of such multiple antenna(s) 1712 to send and/or receive multiple different data streams on the same time and frequency resources. This behavior may be referred to as, for example, multiple input multiple output (MIMO) behavior (referring to the multiple antennas used at each of a transmitting device and a receiving device that enable this aspect). MIMO transmissions by the first wireless device 1702 may be accomplished according to precoding (or digital beamforming) that is applied at the first wireless device 1702 that multiplexes the data streams across the antenna(s) 1712 according to known or assumed channel characteristics such that each data stream is received with an appropriate signal strength relative to other streams and at a desired location in the spatial domain (e.g., the location of a receiver associated with that data stream). Certain embodiments may use single user MIMO (SU-MIMO) methods (where the data streams are all directed to a single receiver) and/or multi user MIMO (MU-MIMO) methods (where individual data streams may be directed to individual (different) receivers in different locations in the spatial domain).

In certain embodiments having multiple antennas, the first wireless device 1702 may implement analog beamforming techniques, whereby phases of the signals sent by the antenna(s) 1712 are relatively adjusted such that the (joint) transmission of the antenna(s) 1712 can be directed (this is sometimes referred to as beam steering).

The first wireless device 1702 may include one or more interface(s) 1714. The interface(s) 1714 may be used to provide input to or output from the first wireless device 1702. For example, a first wireless device 1702 that is a UE may include interface(s) 1714 such as microphones, speakers, a touchscreen, buttons, and the like in order to allow for input and/or output to the UE by a user of the UE. Other interfaces of such a UE may be made up of made up of transmitters, receivers, and other circuitry (e.g., other than the transceiver(s) 1710/antenna(s) 1712 already described) that allow for communication between the UE and other devices and may operate according to known protocols (e.g., Wi-Fi^{®}, Bluetooth^{®}, and the like).

The first wireless device 1702 may include a sidelink module 1716. The sidelink module 1716 may be implemented via hardware, software, or combinations thereof. For example, the sidelink module 1716 may be implemented as a processor, circuit, and/or instructions 1708 stored in the memory 1706 and executed by the processor(s) 1704. In some examples, the sidelink module 1716 may be integrated within the processor(s) 1704 and/or the transceiver(s) 1710. For example, the sidelink module 1716 may be implemented by a combination of software components (e.g., executed by a DSP or a general processor) and hardware components (e.g., logic gates and circuitry) within the processor(s) 1704 or the transceiver(s) 1710.

The sidelink module 1716 may be used for various aspects of the present disclosure, for example, aspects of FIG. 1 to FIG. 15. For example, the sidelink module 1716 may be configured to perform embodiments for configuring various aspects of beam reporting (and its associated beam measurement) as described herein, trigger SL beam reporting as described herein, and/or perform SL beam reporting relative to a zone ID as described herein. The sidelink module 1716 may be configured to enact functionalities of one of a Tx UE 102 and/or an Rx UE 104, as described herein.

The second wireless device 1718 may include one or more processor(s) 1720. The processor(s) 1720 may execute instructions such that various operations of the second wireless device 1718 are performed, as described herein. The processor(s) 1720 may include one or more baseband processors implemented using, for example, a CPU, a DSP, an ASIC, a controller, an FPGA device, another hardware device, a firmware device, or any combination thereof configured to perform the operations described herein.

The second wireless device 1718 may include a memory 1722. The memory 1722 may be a non-transitory computer-readable storage medium that stores instructions 1724 (which may include, for example, the instructions being executed by the processor(s) 1720). The instructions 1724 may also be referred to as program code or a computer program. The memory 1722 may also store data used by, and results computed by, the processor(s) 1720.

The second wireless device 1718 may include one or more transceiver(s) 1726 that may include RF transmitter and/or receiver circuitry that use the antenna(s) 1728 of the second wireless device 1718 to facilitate signaling (e.g., the signaling 1734) to and/or from the second wireless device 1718 with other devices (e.g., the first wireless device 1702) according to corresponding RATs.

The second wireless device 1718 may include one or more antenna(s) 1728 (e.g., one, two, four, or more). In embodiments having multiple antenna(s) 1728, the second wireless device 1718 may perform MIMO, digital beamforming, analog beamforming, beam steering, etc., as has been described.

The second wireless device 1718 may include one or more interface(s) 1730. The interface(s) 1730 may be used to provide input to or output from the second wireless device 1718. For example, a second wireless device 1718 that is a UE may include interface(s) 1730 such as microphones, speakers, a touchscreen, buttons, and the like in order to allow for input and/or output to the UE by a user of the UE. Other interfaces of such a UE may be made up of made up of transmitters, receivers, and other circuitry (e.g., other than the transceiver(s) 1726/antenna(s) 1728 already described) that allow for communication between the UE and other devices and may operate according to known protocols (e.g., Wi-Fi^{®}, Bluetooth^{®}, and the like).

The second wireless device 1718 may include a sidelink module 1732. The sidelink module 1732 may be implemented via hardware, software, or combinations thereof. For example, the sidelink module 1732 may be implemented as a processor, circuit, and/or instructions 1724 stored in the memory 1722 and executed by the processor(s) 1720. In some examples, the sidelink module 1732 may be integrated within the processor(s) 1720 and/or the transceiver(s) 1726. For example, the sidelink module 1732 may be implemented by a combination of software components (e.g., executed by a DSP or a general processor) and hardware components (e.g., logic gates and circuitry) within the processor(s) 1720 or the transceiver(s) 1726.

The sidelink module 1732 may be used for various aspects of the present disclosure, for example, aspects of FIG. 1 through FIG. 15. For example, the sidelink module 1732 may be configured to perform embodiments for configuring various aspects of beam reporting (and its associated beam measurement) as described herein, trigger SL beam reporting as described herein, and/or perform SL beam reporting relative to a zone ID as described herein. The sidelink module 1732 may be configured to enact functionalities of one of a Tx UE 102 and/or an Rx UE 104 (e.g., opposite of the functionality currently enacted by the sidelink module 1716), as described herein.

For one or more embodiments, at least one of the components set forth in one or more of the preceding figures may be configured to perform one or more operations, techniques, processes, and/or methods as set forth herein. For example, a baseband processor as described herein in connection with one or more of the preceding figures may be configured to operate in accordance with one or more of the examples set forth herein. For another example, circuitry associated with a UE, base station, network element, etc. as described above in connection with one or more of the preceding figures may be configured to operate in accordance with one or more of the examples set forth herein.

Any of the above described embodiments may be combined with any other embodiment (or combination of embodiments), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Embodiments and implementations of the systems and methods described herein may include various operations, which may be embodied in machine-executable instructions to be executed by a computer system. A computer system may include one or more general-purpose or special-purpose computers (or other electronic devices). The computer system may include hardware components that include specific logic for performing the operations or may include a combination of hardware, software, and/or firmware.

It should be recognized that the systems described herein include descriptions of specific embodiments. These embodiments can be combined into single systems, partially combined into other systems, split into multiple systems or divided or combined in other ways. In addition, it is contemplated that parameters, attributes, aspects, etc. of one embodiment can be used in another embodiment. The parameters, attributes, aspects, etc. are merely described in one or more embodiments for clarity, and it is recognized that the parameters, attributes, aspects, etc. can be combined with or substituted for parameters, attributes, aspects, etc. of another embodiment unless specifically disclaimed herein.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

Exemplary methods, apparatuses, and computer-readable media are set out in the following items.
1. A method of a transmit (Tx) user equipment (UE) for performing sidelink (SL) communications with a receive (Rx) UE, comprising:
   transmitting higher layer signaling to the Rx UE, the higher layer signaling enabling beam measurement and beam reporting between the Tx UE and the Rx UE;
   transmitting, to the Rx UE, one or more reference signals to be used for the beam measurement at the Rx UE; and
   receiving, from the Rx UE, a beam report of the beam reporting corresponding to the beam measurement.
2. The method of claim 1, wherein the beam measurement and the beam reporting is enabled based on a parameter in one of a SidelinkPreconfigNR information element, a SL-ConfigCommonNR information element, and a SL-PHY-MAC-RLC information element.
3. The method of claim 2, wherein the parameter is further configured to enable one of channel quality index (CQI) reporting and rank indicator (RI) reporting by the Rx UE.
4. A method of a transmit (Tx) user equipment (UE) for performing sidelink (SL) communications with a receive (Rx) UE, comprising:
   transmitting higher layer signaling to the Rx UE, the higher layer signaling configuring beam measurement and beam reporting between the Tx UE and the Rx UE;
   transmitting, to the Rx UE, one or more reference signals to be used for the beam measurement at the Rx UE; and
   receiving, from the Rx UE, a beam report of the beam reporting corresponding to the beam measurement.
5. The method of claim 4, wherein the higher layer signaling includes an information element having a parameter that indicates whether the beam measurement comprises a signal to interference and noise ratio (SINR) measurement or a reference signal received power (RSRP) measurement.
6. The method of claim 4 or 5, wherein the higher layer signaling includes an information element specifying one or more time and frequency locations for one or more channel state information reference signals (CSI-RSs) to be used for the beam measurement.
7. The method of any of claims 4-6, wherein the higher layer signaling includes an information element specifying one or more identifiers identifying a plurality of channel state information reference signals (CSI-RSs) within a slot to be used for the beam measurement.
8. The method of any of claims 4-7, wherein the higher layer signaling includes an information element specifying one or more of:
   a periodicity associated with the beam measurement and the beam reporting;
   a timer associated with the beam measurement and the beam reporting;
   an indication of a triggering event for the beam measurement and the beam reporting; and
   a report configuration identifier (ID) corresponding to the beam measurement and the beam reporting.
9. A method of a transmit (Tx) user equipment (UE) for performing sidelink (SL) communications with a receive (Rx) UE, comprising:
   transmitting higher layer signaling to the Rx UE, the higher layer signaling indicating a latency bound for beam reporting between the Tx UE and the Rx UE;
   transmitting, to the Rx UE, one or more reference signals to be used for a beam measurement at the Rx UE; and
   receiving, from the Rx UE, a beam report of the beam reporting corresponding to the beam measurement within the latency bound.
10. The method of claim 9, wherein the latency bound is indicated in terms of a number of slots.
11. The method of claim 9 or 10, wherein the latency bound is indicated by a parameter in an RRCReconfigurationSidelink information element of the higher layer signaling.
12. A method of a transmit (Tx) user equipment (UE) for performing sidelink (SL) communications with a receive (Rx) UE, comprising:
   sending, to the Rx UE, a combined physical sidelink control channel (PSCCH)/physical sidelink shared channel (PSSCH) transmission including:
   sidelink control information (SCI) configured to trigger a beam report by the Rx UE; and
   one or more channel state information reference signals (CSI-RSs) to be used at the Rx UE for a beam measurement corresponding to the beam report; and
   receiving, from the Rx UE, the beam report.
13. The method of claim 12, wherein the SCI indicates that the combined PSCCH/PSSCH transmission comprises the one or more CSI-RSs.
14. The method of claim 12 or 13, wherein the SCI identifies a channel state information (CSI) report configuration defining a manner of performing the beam measurement and making the beam report.
15. The method of claim 14, wherein the CSI report configuration is indicated using one or more bits of stage 1 of the SCI.
16. The method of claim 14, wherein:
   the CSI report configuration is indicated in stage 2 of the SCI; and
   the beam report is triggered by a field in the stage 2 of the SCI.
17. The method of claim 16, wherein the field is further configured to trigger one of channel quality index (CQI) reporting and rank indicator (RI) reporting by the Rx UE.
18. The method of any of claims 12-17, wherein each of the one or more CSI-RSs belongs to one of one or more CSI-RS resource sets, and wherein each CSI-RS of a given CSI-RS resource set is sent on a same antenna port.
19. The method of any of claims 12-18, wherein the one or more of CSI-RSs comprises CSI-RS repetitions.
20. A method of a transmit (Tx) user equipment (UE) for performing sidelink (SL) communications with a receive (Rx) UE, comprising:
   sending, to the Rx UE, periodic combined physical sidelink control channel (PSCCH)/physical sidelink shared channel (PSSCH) transmissions, wherein one or more of the periodic combined PSCCH/PSSCH transmissions corresponds to one or more beam measurements and includes one or more channel state information reference signals (CSI-RSs) to be used at the Rx UE for the one or more beam measurements;
   sending, to the Rx UE, first sidelink control information (SCI) configured to trigger beam reporting by the Rx UE;
   receiving, from the Rx UE, one or more beam reports of the beam reporting, the beam reports corresponding to the one or more beam measurements; and
   sending, to the Rx UE, second SCI configured to disable the beam reporting by the Rx UE.
21. The method of claim 20, wherein the first SCI indicates a timing of a first in time of the one or more of the periodic combined PSCCH/PSSCH transmissions corresponding to the one or more beam measurements.
22. The method of claim 20 or 21, wherein the second SCI indicates a timing of a one of the periodic combined PSCCH/PSSCH transmissions that does not correspond to a beam measurement.
23. A method of a transmit (Tx) user equipment (UE) for performing sidelink (SL) communications with a receive (Rx) UE, comprising:
   sending, to the Rx UE, periodic combined physical sidelink control channel (PSCCH)/physical sidelink shared channel (PSSCH) transmissions, wherein one or more of the periodic combined PSSCH/PSSCH transmissions corresponds to one or more beam measurements and includes one or more channel state information reference signals (CSI-RSs) to be used at the Rx UE for the one or more beam measurements,
   wherein:
      a first of the periodic combined PSCCH/PSSCH transmissions comprises first sidelink control information (SCI) configured to trigger beam reporting by the Rx UE; and
      a second of the periodic combined PSCCH/PSSCH transmissions comprises second SCI configured to disable the beam reporting by the Rx UE; and
      receiving, from the Rx UE, beam reports of the beam reporting, the beam reports corresponding to the one or more beam measurements.
24. The method of claim 23, wherein the first of the periodic combined PSCCH/PSSCH transmissions is one of the one or more of the periodic combined PSSCH/PSSCH transmissions corresponding to the one or more beam measurements.
25. A method of a receive (Rx) user equipment (UE) for performing sidelink (SL) communications with a transmit (Tx) UE, comprising:
   receiving periodic combined physical sidelink control channel (PSSCH)/physical sidelink shared channel (PSSCH) transmissions that correspond to one or more beam measurements and include one or more channel state information reference signals (CSI-RSs) useable at the Rx UE for the one or more beam measurements;
   performing the one or more beam measurements corresponding to the periodic combined PSSCH/PSSCH transmissions using the one or more CSI-RSs;
   determining, based on a triggering event identified according to the one or more beam measurements, that a beam report is to be sent to the Tx UE; and
   sending the beam report to the Tx UE.
26. The method of claim 25, wherein the triggering event is that a measured quality of a serving beam is below a threshold.
27. The method of claim 25, wherein the triggering event is that a measured quality of an inactive beam is above a threshold.
28. The method of claim 25, wherein the triggering event is that a first measured quality of a first beam is greater than a second measured quality of a serving beam by an offset amount.
29. The method of claim 25, wherein the triggering event is that a first measured quality of a serving beam is below a first threshold, and a second measured quality of another beam is above a second threshold.
30. The method of claim 25, wherein the triggering event is determined according to a resource pool used for the SL communications.
31. The method of claim 25, wherein the triggering event is configured to the Rx UE via SL radio resource control (RRC) signaling performed with the Tx UE.
32. A method of a transmit (Tx) user equipment (UE) for performing sidelink (SL) communications with a receive (Rx) UE, comprising:
   receiving, from the Rx UE, a zone identifier (ID) of the Rx UE;
   determining one or more beams for the Rx UE to measure based on a location of the Tx UE and the zone ID of the Rx UE;
   sending, to the Rx UE, one or more channel state information reference signals (CSI-RSs) corresponding to the one or more beams; and
   receiving, from the Rx UE, a beam report for the one or more beams.
33. A method of a receive (Rx) user equipment (UE) for performing sidelink (SL) communications with a transmit (Tx) UE, comprising:
   receiving, from the Tx UE, a zone identifier (ID) of the Tx UE;
   performing a beam measurement using one or more channel state information reference signals (CSI-RSs) received from the Tx UE;
   selecting one or more beams for a beam report based on the beam measurement, a location of the Rx UE, and the zone ID of the Tx UE; and
   sending the beam report to the Tx UE.
34. An apparatus comprising means to perform the method of any of claim 1 to claim 33.
35. A computer-readable media comprising instructions to cause an electronic device, upon execution of the instructions by one or more processors of the electronic device, to perform the method of any of claim 1 to claim 33.
36. An apparatus comprising logic, modules, or circuitry to perform the method of any of claim 1 to claim 33.

Although the foregoing has been described in some detail for purposes of clarity, it will be apparent that certain changes and modifications may be made without departing from the principles thereof. It should be noted that there are many alternative ways of implementing both the processes and apparatuses described herein. Accordingly, the present embodiments are to be considered illustrative and not restrictive, and the description is not to be limited to the details given herein, but may be modified within the scope and equivalents of the appended claims. The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated

## Claims

1. A method of a transmit (Tx) user equipment (UE) for performing sidelink (SL) communications with a receive (Rx) UE, comprising:
sending, to the Rx UE, a combined physical sidelink control channel (PSCCH)/physical sidelink shared channel (PSSCH) transmission including:
sidelink control information (SCI) configured to trigger a beam report by the Rx UE; and
one or more channel state information reference signals (CSI-RSs) to be used at the Rx UE for a beam measurement corresponding to the beam report; and receiving, from the Rx UE, the beam report.

2. The method of claim 1, wherein the SCI indicates that the combined PSCCH/PSSCH transmission comprises the one or more CSI-RSs.

3. The method of claim 1 or claim 2, wherein the SCI identifies a channel state information (CSI) report configuration defining a manner of performing the beam measurement and making the beam report.

4. The method of any of claim 1 to claim 3, wherein the CSI report configuration is indicated using one or more bits of stage 1 of the SCI.

5. The method of any of claim 1 to claim 3, wherein:
the CSI report configuration is indicated in stage 2 of the SCI; and
the beam report is triggered by a field in the stage 2 of the SCI.

6. The method of claim 5, wherein the field is further configured to trigger one of channel quality index (CQI) reporting and rank indicator (RI) reporting by the Rx UE.

7. The method of any of claim 1 to claim 6, wherein each of the one or more CSI-RSs belongs to one of one or more CSI-RS resource sets, and wherein each CSI-RS of a given CSI-RS resource set is sent on a same antenna port.

8. The method of any of claim 1 to claim 7, wherein the one or more of CSI-RSs comprises CSI-RS repetitions.

9. A method of a transmit (Tx) user equipment (UE) for performing sidelink (SL) communications with a receive (Rx) UE, comprising:
sending, to the Rx UE, periodic combined physical sidelink control channel (PSCCH)/physical sidelink shared channel (PSSCH) transmissions, wherein one or more of the periodic combined PSCCH/PSSCH transmissions corresponds to one or more beam measurements and includes one or more channel state information reference signals (CSI-RSs) to be used at the Rx UE for the one or more beam measurements;
sending, to the Rx UE, first sidelink control information (SCI) configured to trigger beam reporting by the Rx UE;
receiving, from the Rx UE, one or more beam reports of the beam reporting, the beam reports corresponding to the one or more beam measurements; and
sending, to the Rx UE, second SCI configured to disable the beam reporting by the Rx UE.

10. The method of claim 9, wherein the first SCI indicates a timing of a first in time of the one or more of the periodic combined PSCCH/PSSCH transmissions corresponding to the one or more beam measurements; or
wherein the second SCI indicates a timing of a one of the periodic combined PSCCH/PSSCH transmissions that does not correspond to a beam measurement.

11. A method of a transmit (Tx) user equipment (UE) for performing sidelink (SL) communications with a receive (Rx) UE, comprising:
sending, to the Rx UE, periodic combined physical sidelink control channel (PSCCH)/physical sidelink shared channel (PSSCH) transmissions, wherein one or more of the periodic combined PSSCH/PSSCH transmissions corresponds to one or more beam measurements and includes one or more channel state information reference signals (CSI-RSs) to be used at the Rx UE for the one or more beam measurements, wherein:
a first of the periodic combined PSCCH/PSSCH transmissions comprises first sidelink control information (SCI) configured to trigger beam reporting by the Rx UE; and
a second of the periodic combined PSCCH/PSSCH transmissions comprises second SCI configured to disable the beam reporting by the Rx UE; and
receiving, from the Rx UE, beam reports of the beam reporting, the beam reports corresponding to the one or more beam measurements.

12. A method of a receive (Rx) user equipment (UE) for performing sidelink (SL) communications with a transmit (Tx) UE, comprising:
receiving periodic combined physical sidelink control channel (PSSCH)/physical sidelink shared channel (PSSCH) transmissions that correspond to one or more beam measurements and include one or more channel state information reference signals (CSI-RSs) useable at the Rx UE for the one or more beam measurements;
performing the one or more beam measurements corresponding to the periodic combined PSSCH/PSSCH transmissions using the one or more CSI-RSs;
determining, based on a triggering event identified according to the one or more beam measurements, that a beam report is to be sent to the Tx UE; and
sending the beam report to the Tx UE.

13. The method of claim 12, wherein the triggering event is that a measured quality of a serving beam is below a threshold; or
wherein the triggering event is that a measured quality of an inactive beam is above a threshold; or
wherein the triggering event is that a first measured quality of a first beam is greater than a second measured quality of a serving beam by an offset amount; or
wherein the triggering event is that a first measured quality of a serving beam is below a first threshold, and a second measured quality of another beam is above a second threshold; or
wherein the triggering event is determined according to a resource pool used for the SL communications; or
wherein the triggering event is configured to the Rx UE via SL radio resource control (RRC) signaling performed with the Tx UE.

14. A baseband processor for a user equipment (UE) that is configured to cause the UE to perform one or more elements of any one of claim 1 to claim 13.

15. A computer-readable media comprising instructions to cause an electronic device, upon execution of the instructions by one or more processors of the electronic device, to perform the method of any of claim 1 to claim 13.
